# FASCICULE DE BREVET EUROPEEN

(11) **EP 4 169 661 B1**
(45) Date de publication et mention de la délivrance du brevet: **05.06.2024**
(21) Numéro de dépôt: 22195638.6
(22) Date de dépôt: 14.09.2022
(51) Int. Cl.: B23K 37/02, B23K 101/04

(54) **DISPOSITIF DE SOUDAGE TÉLÉOPÉRÉ**
FERNGESTEUERTE SCHWEISSVORRICHTUNG
REMOTELY-OPERATED WELDING DEVICE

(30) Priorité: 23.09.2021 FR 2110035
(43) Date de publication de la demande: 26.04.2023
(73) Titulaire: Commissariat à l'énergie atomique et aux énergies alternatives, 75015 Paris (FR)
(72) Inventeur: PERROT, Yann, 91700 SAINT-GENEVIEVE DES BOIS (FR)
(74) Mandataire: Cabinet Boettcher

(56) Documents cités:
- CN-A- 109 746 841
- KR-A- 20060 073 570
- KR-B1- 102 046 631

## Description

La présente invention concerne le domaine de la maintenance des ouvrages d'art et plus particulièrement la maintenance des ponts à augets.

### ARRIERE PLAN DE L'INVENTION

Classiquement, un pont à tablier en dalle orthotrope comprend un tablier métallique raidi en sa face inférieure par une série d'augets rapportés par soudage. La face supérieure du tablier reçoit un revêtement de circulation de type bitume qui accueille les véhicules et/ou piétons. Les soudures de liaison des augets au tablier et des sections d'augets entre eux présentent généralement, avec le temps et les sollicitations en fatigue cyclique, des fissures qui menacent la résistance structurelle du pont. La procédure standard de reprise des soudures, comprend généralement l'installation d'échafaudages sous le pont et la réalisation de travaux de soudure depuis ces échafaudages. Lorsque la fissure s'étend sur toute la profondeur de la soudure, il est généralement nécessaire de déposer l'auget et réaliser une soudure à pleine pénétration sur baguette céramique. De telles interventions de maintenance sont longues et coûteuses, particulièrement en ce qu'elles requièrent une immobilisation partielle (réduction des flux de circulation) ou totale du pont pendant la période des travaux. Enfin, il est fréquent que la fissure dans la soudure de l'auget sur le tablier se propage dans le tablier, ce qui oblige généralement à reprendre la fissure par le dessus du tablier et ainsi déposer le revêtement de circulation. Une telle dépose prolonge la durée d'immobilisation du pont et augmente les coûts de maintenance.

Le document KR 2006 0073570 A (sur lequel le préambule de la revendication 1 est basé), décrit suivant son résumé, un équipement permettant de souder automatiquement une surface circonférentielle interne de tuyaux.

### OBJET DE L'INVENTION

L'invention a notamment pour but de réduire les coûts et/ou délais de maintenance d'un pont à augets.

### RESUME DE L'INVENTION

A cet effet, la présente invention décrit un dispositif de soudage téléopéré selon la revendication 1, comprenant un châssis pourvu de moyens motorisés de déplacement du dispositif suivant un premier axe principal et portant un chariot relié à un bras de manipulation d'une tête de soudage. Le dispositif comprend également : un premier actionneur linéaire relié au châssis pour déplacer le chariot suivant un deuxième axe sensiblement parallèle au premier axe principal. Un premier segment du bras de manipulation comprend une première extrémité montée à rotation sur le chariot autour d'un troisième axe sensiblement parallèle au premier axe à l'aide d'un deuxième actionneur. Un deuxième segment du bras de manipulation est monté à coulissement sur une deuxième extrémité du premier segment de bras pour coulisser suivant un quatrième axe formant un premier angle non nul avec le troisième axe à l'aide d'un troisième actionneur. Un troisième segment du bras de manipulation possède une quatrième extrémité qui est montée à rotation sur une troisième extrémité du deuxième segment de bras autour d'un cinquième axe parallèle au quatrième axe à l'aide d'un quatrième actionneur. Un quatrième segment de bras possède une sixième extrémité qui est montée à rotation sur une cinquième extrémité du troisième segment de bras autour d'un sixième axe formant un deuxième angle non nul avec le cinquième axe à l'aide d'un cinquième actionneur.

Une septième extrémité du quatrième segment est solidaire de la tête de soudage.

On obtient un dispositif compact dont le bras de manipulation possède seulement cinq degrés de liberté qui sont suffisants pour réaliser l'ensemble des soudures spécifiques à la réparation d'un auget de pont. Un tel ensemble est plus compact qu'un bras articulé classique comprenant six degrés de liberté et possède une plage d'action identique pour un coût moindre. Le dispositif permet d'intervenir depuis l'intérieur de l'auget, autorisant alors une reprise des soudures du pont sans dépose du revêtement de roulage. Enfin, l'absence d'échafaudage réduit fortement les temps d'immobilisation du pont et les coûts des opérations de maintenance

La compacité du dispositif est améliorée lorsque le premier angle est compris entre soixante et cent-vingt degrés, préférentiellement égal à quatre-vingt-dix degrés.

Avantageusement, le deuxième angle est compris entre soixante et cent-vingt degrés, préférentiellement égal à quatre-vingt-dix degrés.

La qualité des travaux de soudage est améliorée lorsque le dispositif de soudage téléopéré comprend au moins un dispositif de retour haptique.

Il est possible de mettre en oeuvre des procédés de soudage à apport de métal externe lorsque e dispositif comprend un mécanisme de distribution d'un métal d'apport.

Selon un mode de réalisation préféré, le mécanisme de distribution de métal d'apport est solidaire du quatrième segment.

Un grand nombre de défauts peut être repris lorsque la tête de soudage est une tête de soudage de type TIG.

L'autonomie du dispositif est améliorée lorsqu'il comprend un port de liaison mécanique et/ou électrique à une unité extérieure de puissance.

D'autres caractéristiques et avantages de l'invention ressortiront à la lecture de la description qui suit d'un mode de réalisation particulier/ d'une mise en oeuvre particulière et non limitatif/limitative de l'invention.

### BREVE DESCRIPTION DES DESSINS

Il sera fait référence aux dessins annexés, parmi lesquels :
[Fig. 1] La figure 1 est une représentation schématique en plan d'un premier mode de réalisation de l'invention ;
[Fig. 2] la figure 2 est une représentation schématique en plan du dispositif de la figure 1 dans une première configuration de travail ;
[Fig. 3] la figure 3 est une représentation schématique en plan du dispositif de la figure 1 dans une deuxième configuration de travail ;
[Fig. 4] la figure 4 est une représentation schématique en plan du dispositif de la figure 1 dans une troisième configuration de travail ;
[Fig. 5] La figure 5 est une représentation schématique en plan d'un deuxième mode de réalisation de l'invention.

### DESCRIPTION DETAILLEE DE L'INVENTION

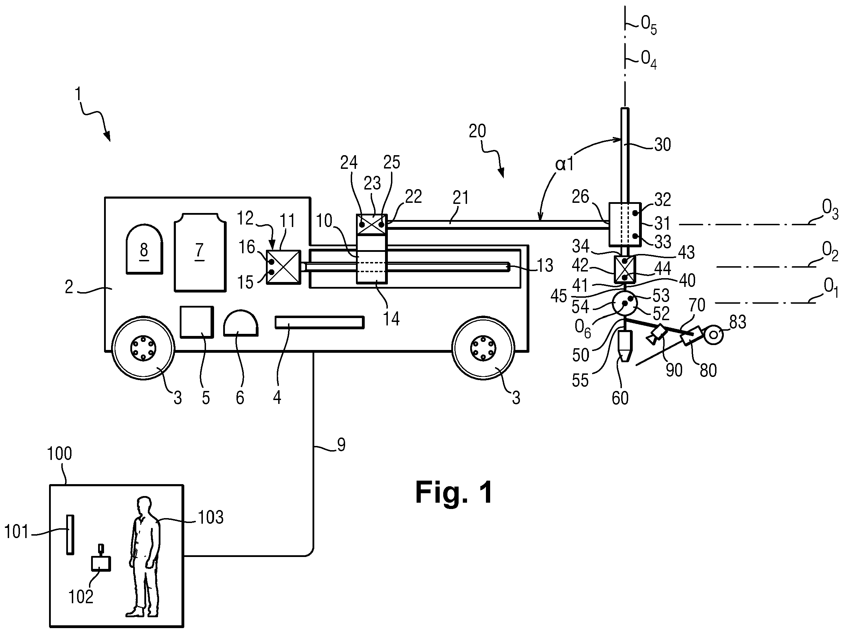

En référence à la figure 1, le dispositif de soudage téléopéré selon l'invention, et généralement désigné 1, comprend un châssis 2 pourvu de quatre roues motrices 3, une unité d'alimentation 4 électrique filaire, une unité de traitement 5 reliée à une unité de communication 6 filaire, un générateur de soudage 7 TIG et une première bonbonne de gaz d'inertage 8. L'unité de communication 6 est reliée à un centre de contrôle à distance 100 à l'aide d'un ombilic 9. Les quatre roues motrices 3 permettent, lorsqu'elles tournent à même vitesse, de déplacer le châssis 2 selon un premier axe principal O1.

Le châssis 2 porte un chariot 10 relié à un bras 20 de manipulation d'une tête de soudage 60 de type TIG. Le dispositif 1 comprend également un premier actionneur 11 linéaire, ici un premier moteur 12 d'entrainement d'une vis à bille 13 qui coopère avec un écrou 14 solidaire du chariot 10. Le moteur 12 est relié au châssis 2 et la vis à bille 13 s'étend suivant un deuxième axe O2 sensiblement parallèle à l'axe O1. Le moteur 12 comprend un premier codeur 15 rotatif et un premier capteur 16 de couple.

Le bras 20 comprend un premier segment 21 comprenant une première extrémité 22 montée à rotation sur le chariot 10 autour d'un troisième axe O3 sensiblement parallèle au premier axe O1 à l'aide d'un deuxième actionneur 23. L'actionneur 23 comprend un deuxième codeur 24 rotatif et un deuxième capteur 25 de couple.

Un deuxième segment 30 du bras 20 est monté à coulissement sur une deuxième extrémité 26 du premier segment 21 pour coulisser à l'aide d'un troisième actionneur 31 suivant un quatrième axe O4 formant un premier angle α1 de quatre-vingt-dix degrés avec le troisième axe O3. L'actionneur 31 comprend un troisième codeur 32 de déplacement linéaire et un troisième capteur 33 d'effort.

Un troisième segment 40 du bras 20 comprend une quatrième extrémité 41 qui est montée à rotation sur une troisième extrémité 34 du deuxième segment 30 autour d'un cinquième axe O5 parallèle au quatrième axe O4 à l'aide d'un quatrième actionneur 42. L'axe O5 est, ici, confondu avec l'axe O4 et l'actionneur 42 comprend un quatrième codeur 43 rotatif et un quatrième capteur 44 de couple.

Un quatrième segment 50 du bras 20 comprend une sixième extrémité 51 qui est montée à rotation sur une cinquième extrémité 45 du segment 40 autour d'un sixième axe O6 formant un deuxième angle de quatre-vingt-dix degrés avec le cinquième axe O5 à l'aide d'un cinquième actionneur 52. L'actionneur 52 comprend un cinquième codeur 53 rotatif et un cinquième capteur 54 de couple.

La tête de soudage 60 est montée solidaire d'une septième extrémité 55 du segment 50.

Le segment 50 porte également un support 70 d'un mécanisme 80 de distribution d'un métal d'apport 81, ici une baguette 82, dont la distribution est pilotée à l'aide d'une roulette 83 actionnée. Le support 70 porte également une caméra 90 de captation d'un bain de fusion généré par la tête de soudage 60.

Les roues 3, le générateur de soudage 7 ainsi que la tête de soudage 60, les actionneurs 11, 23, 31, 42, 52, les codeurs 15, 24, 32, 43, 53, les capteurs 16, 25, 33, 44, 54, la roulette 83 et la caméra 90 sont reliés à l'unité de traitement 5.

Les informations en provenance des codeurs 15, 24, 32, 43, 53 et des capteurs 16, 25, 33, 44, 54 permettent de constituer un dispositif 1 de soudage à retour haptique téléopéré depuis le centre de contrôle à distance 100 en complément des informations de caméra 90.

Optionnellement, le dispositif 1 peut comprendre une ou plusieurs caméras auxiliaires disposées sur le châssis 2 pour surveiller l'environnement de travail du dispositif 1.

Avantageusement, le dispositif 1 est agencé de manière à ce que sa largeur hors-tout soit inférieure à deux-cent millimètres et que sa hauteur hors-tout soit inférieure à deux-cent millimètres.

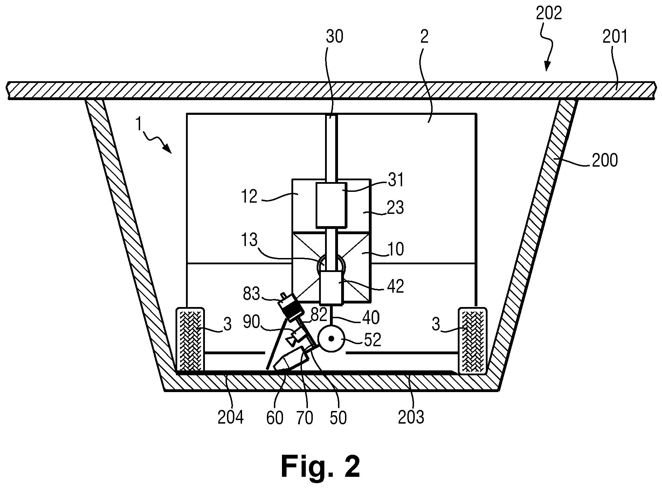

En fonctionnement, le dispositif 1 est placé dans un auget 200 d'un tablier 201 d'un pont 202. Comme visible en figure 2, les roues 3 sont placés au contact de l'âme 203 de l'auget 200. La progression du dispositif 1 à l'intérieur de l'auget 200 est réalisée en commandant la rotation des roues 3. La configuration spécifique du bras 20 permet de placer et déplacer la tête de soudage 60 face à la soudure à reprendre.

La figure 2 représente une configuration du bras 20 pour la reprise d'une soudure 204 de type « à plat » sur l'âme 203. Le déplacement de la tête de soudage 60 le long de la soudure 204 est assuré par un pilotage conjoint des actionneurs 31 et 52. Les images capturées par la caméra 90 ainsi que les données des codeurs 15, 24, 32, 43, 53 et des capteurs 16, 25, 33, 44, 54 sont exploitées de manière connue pour réaliser un retour vidéo sur un écran 101 et un retour haptique sur un effecteur 102 de l'opération de soudage à un opérateur 103 situé dans le centre de contrôle à distance 100. Une orientation symétrique du bras 20 est mise en oeuvre pour les soudures de type « plafond ».

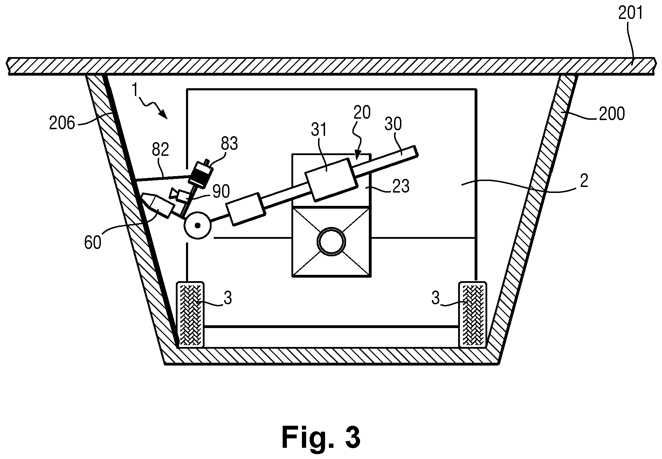

La figure 3 représente une configuration du bras 20 pour la reprise d'une soudure 205 de type « montante » joignant deux sections d'une aile 206 de l'auget 200. Le déplacement de la tête de soudage 60 le long de la soudure 205 est assuré par un pilotage conjoint des actionneurs 23 et 31.

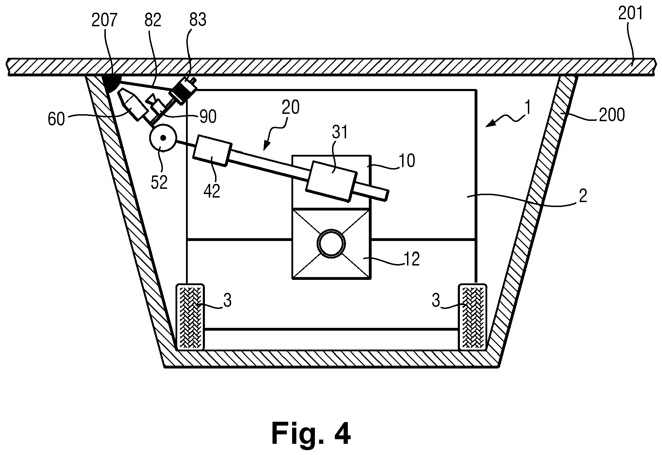

La figure 4 représente une configuration du bras 20 pour la reprise d'une soudure 207 de type « plafond » joignant l'aile 206 de l'auget 200 au tablier 201. Le déplacement de la tête de soudage 60 le long de la soudure 207 est assuré par le pilotage de l'actionneur 11 et/ou des roues motrices 3.

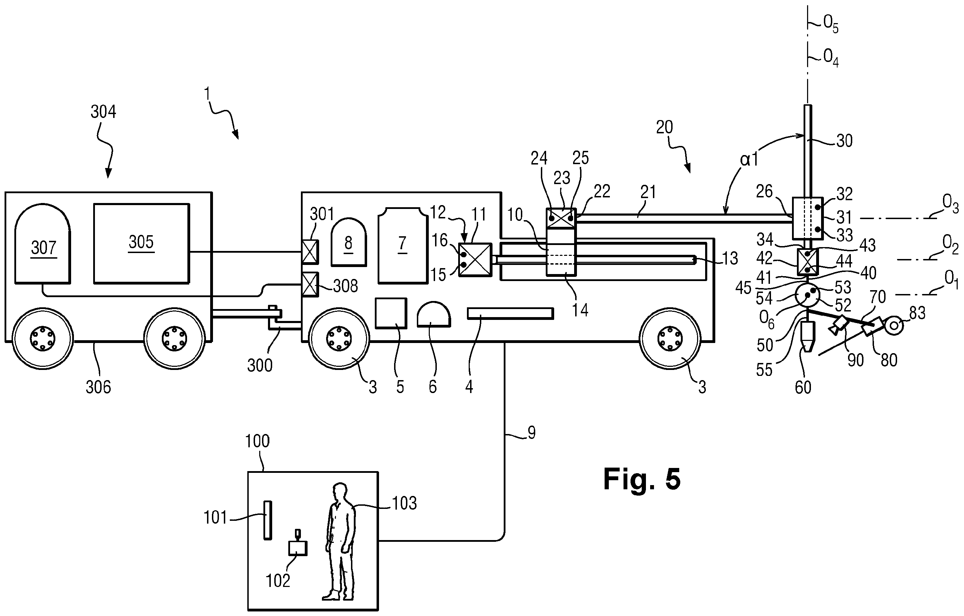

Selon un second mode de réalisation représenté e figure 5, le dispositif 1 comprend un port de liaison mécanique 300 et un port de liaison électrique 301 à une unité extérieure 304 de puissance. L'unité 304 comprend une source complémentaire de tension 305 montée sur une plateforme roulante 306. L'unité 304 comprend également une deuxième bonbonne 307 complémentaire de gaz d'inertage reliée au dispositif 1 par un port de liaison fluidique 308.

Bien entendu, l'invention n'est pas limitée au mode de réalisation décrit mais englobe toute variante entrant dans le champ de l'invention telle que définie par les revendications.

En particulier,
- bien qu'ici la tête de soudage soit une tête de type TIG avec métal d'apport et gaz d'inertage, l'invention s'applique également à d'autres procédés de soudage tels que le MIG, MAG, fil fourré avec ou sans gaz (procédé « inner shield »), électrode enrobée ou soudage sans apport de métal ;
- bien qu'ici le dispositif comprenne des roues motrices, l'invention s'applique également à d'autres types de moyens motorisés de déplacement du dispositif suivant un premier axe principal comme par exemple des chenilles ;
- bien qu'ici le dispositif comprenne une unité d'alimentation électrique filaire et une unité de communication filaire, l'invention s'applique également à une alimentation électrique par batterie et/ou une communication à l'aide de protocoles sans fil par ondes radio ;
- bien qu'ici le troisième axe et le quatrième axe forment un premier angle égal à quatre-vingt-dix degrés, l'invention s'applique également à un premier angle compris entre soixante et cent-vingt degrés ;
- bien qu'ici les actionneurs comprennent des capteurs de couple ou d'efforts, l'invention s'applique également à d'autres moyens de mesure des efforts en sortie d'actionneurs comme par exemple des capteurs de courant ;
- bien qu'ici le cinquième axe soit confondu avec le quatrième axe, l'invention s'applique également à un quatrième axe et un cinquième axe distincts et parallèles avec une tolérance de l'ordre de trente degrés ;
- bien qu'ici le cinquième axe et le sixième axe forment un deuxième angle égal à quatre-vingt-dix degrés, l'invention s'applique également à un deuxième angle compris entre soixante et cent-vingt degrés ;
- bien qu'ici chaque segment du bras comprenne un capteur d'effort et un codeur pour constituer un dispositif de retour haptique, l'invention s'applique également à d'autres types de dispositif de retour haptique comme par exemple un dispositif de retour haptique comprenant un nombre différent de capteur d'effort ou de codeur, voire pas de codeur du tout ;
   - - bien qu'ici le métal d'apport soit une baguette, l'invention s'applique également à d'autres modes d'approvisionnement du métal d'apport, comme par exemple un métal d'apport conditionné en bobine et le mécanisme de distribution est une molette ou u moteur d'entrainement de la bobine. La bobine pouvant être stockée sur a base du bras ou sur le châssis ;
- bien qu'ici le dispositif soit pourvu de quatre roues motrices, l'invention s'applique également à d'autres types de motorisation comme par exemple un véhicule à deux roues motrices, une roue motrice, trois ou plus de quatre.

## Revendications

1. Dispositif de soudage téléopéré (1), comprenant un châssis (2) pourvu de moyens motorisés (3) de déplacement du dispositif (1) suivant un premier axe (O1) et portant un chariot (10) relié à un bras de manipulation (20) d'une tête de soudage (60), le dispositif (1) étant **caractérisé par** :
- un premier actionneur (11) linéaire relié au châssis (2) pour déplacer le chariot (10) suivant un deuxième axe (O2) sensiblement parallèle au premier axe principal (O1);
- un premier segment (21) du bras de manipulation (20) comprenant une première extrémité (22) montée à rotation sur le chariot (10) autour d'un troisième axe (O3) sensiblement parallèle au premier axe (O1) à l'aide d'un deuxième actionneur (23);
- un deuxième segment (30) du bras de manipulation (20) monté à coulissement sur une deuxième extrémité (26) du premier segment (21) de bras de manipulation (20) pour coulisser suivant un quatrième axe (O4) formant un premier angle non nul avec le troisième axe (O3) à l'aide d'un troisième actionneur (31);
- un troisième segment (40) du bras de manipulation (20) dont une quatrième extrémité (41) est montée à rotation sur une troisième extrémité (34) du deuxième segment (30) de bras de manipulation (20) autour d'un cinquième axe (O5) parallèle au quatrième axe (O4) à l'aide d'un quatrième actionneur (42);
- un quatrième segment (50) de bras de manipulation dont une sixième extrémité (51) est montée à rotation sur une cinquième extrémité (45) du troisième segment (40) de bras de manipulation (20) autour d'un sixième axe (O6) formant un deuxième angle non nul avec le cinquième axe (O5) à l'aide d'un cinquième actionneur (52);
- une septième extrémité (55) du quatrième segment (50) solidaire de la tête de soudage (60).

2. Dispositif (1) selon la revendication 1, dans lequel le premier angle est compris entre soixante et cent-vingt, préférentiellement égal à quatre-vingt-dix degrés.

3. Dispositif (1) selon la revendication 1 ou 2, dans lequel le deuxième angle est compris entre soixante et cent-vingt degrés, préférentiellement égal à quatre-vingt-dix degrés.

4. Dispositif (1) selon l'une quelconque des revendications précédentes, comprenant au moins un dispositif de retour haptique (15, 16, 24, 25, 32, 33, 43, 44, 53, 54) .

5. Dispositif (1) selon l'une quelconque des revendications précédentes, comprenant un mécanisme de distribution (83) d'un métal d'apport (81).

6. Dispositif (1) selon la revendication 5, dans lequel le mécanisme de distribution (83) de métal d'apport (81) est solidaire du quatrième segment (50).

7. Dispositif (1) selon l'une quelconque des revendications précédentes, dans lequel la tête de soudage (60) est une tête de soudage de type TIG.

8. Dispositif (1) selon l'une quelconque des revendications précédentes, comprenant un port de liaison mécanique (300) et/ou un port de liaison électrique (301) à une unité extérieure de puissance.

## Patentansprüche

1. Ferngesteuerte Schweißvorrichtung (1), umfassend ein Gestell (2), das mit motorisierten Mitteln (3) zum Bewegen der Vorrichtung (1) entlang einer ersten Achse (01) versehen ist und einen Schlitten (10) trägt, der mit einem Manipulationsarm (20) zur Manipulation eines Schweißkopfs (60) verbunden ist, wobei die Vorrichtung (1) **gekennzeichnet ist durch**:
- einen ersten Linearaktor (11), der mit dem Gestell (2) verbunden ist, um den Schlitten (10) entlang einer zweiten Achse (02) zu verschieben, die im Wesentlichen parallel zur ersten Hauptachse (01) ist;
- ein erstes Segment (21) des Manipulationsarms (20), das ein erstes Ende (22) umfasst, das an dem Schlitten (10) um eine dritte Achse (03), die im Wesentlichen parallel zur ersten Achse (01) ist, mit Hilfe eines zweiten Aktors (23) drehbar gelagert ist;
- ein zweites Segment (30) des Manipulationsarms (20), das an einem zweiten Ende (26) des ersten Segments (21) des Manipulationsarms (20) verschiebbar gelagert ist, um sich entlang einer vierten Achse (04), die einen ersten Winkel ungleich Null mit der dritten Achse (03) bildet, mit Hilfe eines dritten Aktors (31) zu bewegen;
- ein drittes Segment (40) des Manipulationsarms (20), von dem ein viertes Ende (41) an einem dritten Ende (34) des zweiten Segments (30) des Manipulationsarms (20) um eine fünfte Achse (05), die parallel zur vierten Achse (04) ist, mit Hilfe eines vierten Aktors (42) drehbar gelagert ist;
- ein viertes Segment (50) des Manipulationsarms, von dem ein sechstes Ende (51) an einem fünften Ende (45) des dritten Segments (40) des Manipulationsarms (20) um eine sechste Achse (06), die einen zweiten Winkel ungleich Null mit der fünften Achse (05) bildet, mit Hilfe eines fünften Aktors (52) drehbar gelagert ist;
- ein siebtes Ende (55) des vierten Segments (50), das fest mit dem Schweißkopf (60) verbunden ist.

2. Vorrichtung (1) nach Anspruch 1, bei der der erste Winkel zwischen sechzig und hundertzwanzig Grad beträgt, vorzugsweise gleich neunzig Grad ist.

3. Vorrichtung (1) nach Anspruch 1 oder 2, bei der der zweite Winkel zwischen sechzig und hundertzwanzig Grad beträgt, vorzugsweise gleich neunzig Grad ist.

4. Vorrichtung (1) nach einem der vorhergehenden Ansprüche, die mindestens eine haptische Feedbackvorrichtung (15, 16, 24, 25, 32, 33, 43, 44, 53, 54) umfasst.

5. Vorrichtung (1) nach einem der vorhergehenden Ansprüche, die einen Verteilungsmechanismus (83) zum Verteilen eines Füllmetalls (81) umfasst.

6. Vorrichtung (1) nach Anspruch 5, bei der der Verteilungsmechanismus (83) zum Verteilen von Füllmetall (81) fest mit dem vierten Segment (50) verbunden ist.

7. Vorrichtung (1) nach einem der vorhergehenden Ansprüche, bei der der Schweißkopf (60) ein Schweißkopf vom Typ TIG ist.

8. Vorrichtung (1) nach einem der vorhergehenden Ansprüche, die einen Port (300) zur mechanischen Verbindung und/oder einen Port (301) zur elektrischen Verbindung mit einer externen Leistungseinheit umfasst.

## Claims

1. A remotely-operated welding device (1), comprising a frame (2) provided with motorised means (3) for moving the device (1) along a first axis (01) and carrying a carriage (10) connected to a handling arm (20) of a welding head (60), the device (1) being **characterised by**:
- a first linear actuator (11) connected to the frame (2) for moving the carriage (10) along a second axis (02) substantially parallel to the first main axis (01);
- a first segment (21) of the handling arm (20) comprising a first end (22) mounted on the carriage (10) to rotate about a third axis (03) substantially parallel to the first axis (01) by means of a second actuator (23);
- a second segment (30) of the handling arm (20) slidably mounted on a second end (26) of the first segment (21) of the handling arm (20) to slide along a fourth axis (04) forming a first non-zero angle with the third axis (03) by means of a third actuator (31);
- a third segment (40) of the handling arm (20), a fourth end (41) of which is mounted on a third end (34) of the second segment (30) of the handling arm (20) to rotate about a fifth axis (05) parallel to the fourth axis (04) by means of a fourth actuator (42);
- a fourth handling arm segment (50), a sixth end (51) of which is mounted on a fifth end (45) of the third segment (40) of the handling arm (20) to rotate about a sixth axis (06) forming a second non-zero angle with the fifth axis (05) by means of a fifth actuator (52);
- a seventh end (55) of the fourth segment (50) integral with the welding head (60).

2. The device (1) according to claim 1, wherein the first angle is between sixty and one hundred and twenty, preferably equal to ninety degrees.

3. The device (1) of claim 1 or 2, wherein the second angle is between sixty and one hundred and twenty degrees, preferably equal to ninety degrees.

4. The device (1) according to any one of the preceding claims, comprising at least one haptic feedback device (15, 16, 24, 25, 32, 33, 43, 44, 53, 54).

5. The device (1) according to any one of the preceding claims, comprising a dispensing mechanism (83) for a filler metal (81).

6. The device (1) according to claim 5, wherein the dispensing mechanism (83) of filler metal (81) is integral with the fourth segment (50).

7. The device (1) according to any one of the preceding claims, wherein the welding head (60) is a TIG-type welding head.

8. The device (1) according to any one of the preceding claims, comprising a mechanical connection port (300) and/or an electrical connection port (301) to an external power unit.
